# EUROPEAN PATENT APPLICATION

(11) **EP 2 339 765 A1**
(43) Date of publication of application: **29.06.2011**
(21) Application number: 10196462.5
(22) Date of filing: 22.12.2010
(51) Int. Cl.: H04H 20/63, H04M 1/60, H04H 60/90

(54) **Flush mounted bluetooth audio interface and method for connecting the same to a mobile device provided with a bluetooth peripheral device**

(30) Priority: 28.12.2009 IT MI20092312
(71) Applicant: Vimar SpA, 36063 Marostica, (Vicenza) (IT)
(72) Inventor: Pomella, Alberto Antonio, 33100, UDINE (IT); Piussi, Daniele, 33010, CHIUSAFORTE (UDINE) (IT)
(74) Representative: Petruzziello, Aldo

(57) **Abstract**

There is described a Bluetooth® audio interface (IAB) suitable for receiving an audio signal (S1) transmitted by a mobile device (20, 30, 40) provided with a Bluetooth® communication peripheral device and for transferring it (S3) to an acoustic diffusion system (DS). The interface (IAB) comprises a Bluetooth® audio receiver (RA) and means (60) for power supplying the Bluetooth® audio receiver (RA), said Bluetooth® audio receiver (RA) and the respective power supply means (60) being sized such that they can be housed within a flush mounted connector box (10). There is, further, described a method for automatically connecting the interface (IAB) to a mobile device (20, 30, 40).

## Description

### DESCRIPTION

The present invention relates, in general, to the field of wireless transmission and reception systems. In particular, the invention relates to flush mounted Bluetooth® audio interface. The invention further relates to a method for connecting the Bluetooth® audio interface to a mobile device provided with a Bluetooth® audio communication peripheral device.

Mobile devices, such as cellular phones, are become more and more multi-function devices. At present, by using a cellular phone, it is possible not only to made and receive telephone calls, but also to take photos, to film and to listen to music.

With particular reference to the music listening, the user typically, stores a number of audio files into the memory of the mobile device and listen to them by using an earphone, loudspeakers integrated in the mobile device, if provided, or by connecting the mobile device to external acoustic diffusers, through suitable wires and/or adapters.

In the last years, there was been a rapid development and diffusion of wireless communication standards, such as the Bluetooth® standard. Most of the mobile devices at present on the market are provided with a wireless Bluetooth® communication peripheral device.

As it is known, the Bluetooth® standard allows different devices to dialogue and interact each other without the need of cable or wireless connections, by using a short range radio communication.

The topologically easier networks that can be formed by using devices provided with Bluetooth® technology comprise at the most eight elements and are called piconetworks or piconets.

The transmission radius is of about 10 meters, such a distance being imposed by the need to limit the transmission power and, accordingly, the power consumption of the transmitting mobile device, which is typically a battery device, whereby the autonomy of operation is a critical condition.

The Bluetooth® standard operates in the frequency band between 2.4 and 2.5 GHz, which is called ISM (Industrial Scientific and Medical) and is free for any use licence, by employing a transmission technique of FHSS (Frequency Hopping Spread Spectrum) type. In this transmission technique, the frequency is not fixed but varies hopping among 79 different frequencies at regular intervals and according to a pseudorandom sequence. This allows to correctly operate also in very disturbed environments.

Data can be transmitted on synchronous (SCO, Synchronous Connection-Oriented) or asynchronous (ACL, Asynchronous Connection-Less) channels. The former are typically used for the audio traffic, wherein it is necessary to maintain the temporal coherence, whereas the latter are used for the data traffic. The transmission rate varies from 1 to 3 megabit per second (Mbps).

WO 2009/051347 A1 discloses a flat speaker which receives signals from sound generating means, such as CD players, MP3 players and so on, by radio through Bluetooth communication. The speaker is provided with an attachment magnet thereby being mounted anywhere, such as on the surface of a wall or a floor.

US 2008/182518 A1 discloses a multimedia switching system including a dongle connected to a computer and multiple receivers, each having a multimedia installation externally connected thereto. Any receiver while picking up a trigger signal sends a signal requesting connection to the dongle thus creating connection to the dongle. Therefore, video and audio signals outputted from the computer are further outputted from the multimedia installation externally connected to the receiver.

US 2005/266798 discloses a method for establishing a wireless proximity connection with a first device and a second device by associating an authorization identifier with a contact entry.

The main object of the present invention is to provide a Bluetooth® audio interface suitable for receiving an audio signal, preferably a high quality stereo audio signal, transmitted by a mobile device, e.g. a cellular phone, a hand-held computer, a MP3 player, or a notebook computer, provided with a wireless Bluetooth® communication peripheral device and for transferring it to a conventional acoustic diffusion system in household or services sector environments, without the aid of earphones, cables or adapters, or a specific software stored in the mobile device.

Advantageously, the Bluetooth® audio interface is such sized to be housed within a flush mounted connector box, thereby resulting perfectly integrated with the remaining components of the electric installation of the household or services sector environment.

A further object of the invention is to provide a method for connecting the Bluetooth® audio interface to a mobile device designed to transmit audio signals according to the Bluetooth® communication standard.

A typical implementation of the present invention is inside hotel rooms, wherein a client provided with a cellular phone, hand-held computer, MP3 player, or notebook computer can listen his preferred audio tracks or recordings played by the acoustic diffusion system of his room, without the need to connect the mobile device to the loudspeakers by using uncomfortable cables and/or adapters.

The above mentioned objects, and other objects which will be clearer in the following, are obtained according to the invention having the features provided in the appended independent claims 1 and 10.

According to a first aspect of the present invention, there is provided a Bluetooth® audio interface suitable for receiving an audio signal transmitted by a mobile device provided with a Bluetooth® communication peripheral device and for transferring it to an acoustic diffusion system. The Bluetooth® audio interface comprises a Bluetooth® audio receiver and power supply means for the Bluetooth® audio receiver, the Bluetooth® audio receiver and the respective power supply means being such sized to be housed within a flush mounted connector box. The interface is connected to the acoustic diffusion system by means of a shielded cable, the audio signal outputted from the acoustic diffusion system being a stereo signal, having a band extending throughout the audible range, and quantized at 16 bit.

According to another aspect of the invention, there is provided a method for automatically connecting the above defined Bluetooth® audio interface with a mobile device provided with a Bluetooth® communication peripheral device, the method comprising the steps of:
- to associate the mobile device with the interface;
- to cyclically control, through the interface, the presence of the mobile device and, if this presence is detected;
- to connect the interface to the detected mobile device.

Preferably, the association step comprises the further steps of:
- to determine a secret identification key; and
- to exchange the secret identification key between the mobile device and the interface.

Further advantageous aspects of the invention are apparent from the dependent claims.

The features of the invention will be evident from the following detailed description, which refers to a purely exemplifying and therefore non-limiting embodiment thereof, illustrated in the appended figures, wherein:
Figure 1 is a diagrammatic view of a flush mounted Bluetooth® audio interface according to the invention;
Figure 2 shows in detail the flush mounted Bluetooth® audio interface of Figure 1 connected to a amplified acoustic diffusion system;
Figure 3 shows in detail the flush mounted Bluetooth® audio interface of Figure 1 connected to non-amplified or passive audio diffusers; and
Figure 4 is a flow chart, showing the steps of the method for connecting the Bluetooth® audio interface to a mobile device provided with a wireless Bluetooth® communication peripheral device.

In the appended figures, corresponding elements will be identified by the same reference numerals.

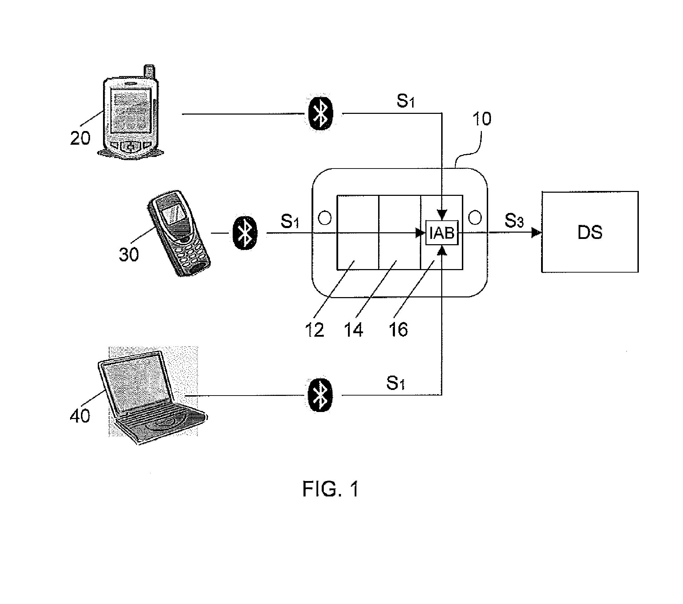

With reference to Figure 1, a flush mounted Bluetooth® audio interface IAB according to the invention is illustrated.

The interface IAB is housed within a flush mounted connector box 10, e.g. within a one ore more modules of a flush mounted connector box 10 having three modules 12, 14, 16.

The interface IAB is so configured to receive an audio signal S₁ transmitted by a mobile device, e.g. a hand-held computer 20, a cellular phone 30 or a notebook computer 40, and to transfer it, suitably processed (audio signal S₃) to an acoustic diffusion system DS, of the amplified or non-amplified type.

Preferably, the interface IAB, and each mobile device 20, 30, 40, support the Bluetooth® audio profile A2DP (Advanced Audio Distribution Profile), which allows high quality audio signals to be transferred. Such a profile is widely known and it will not be further described in the present document.

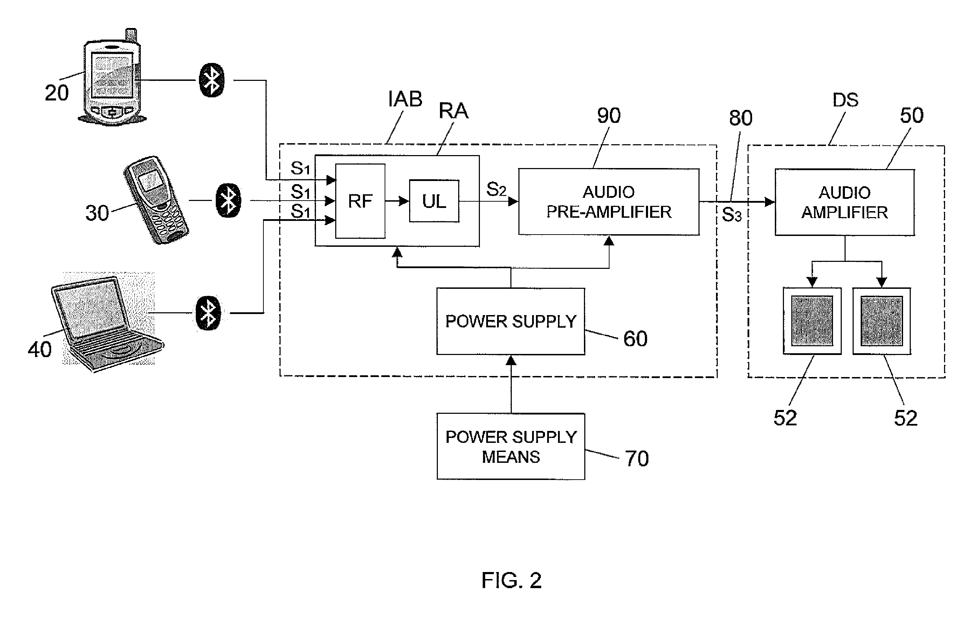

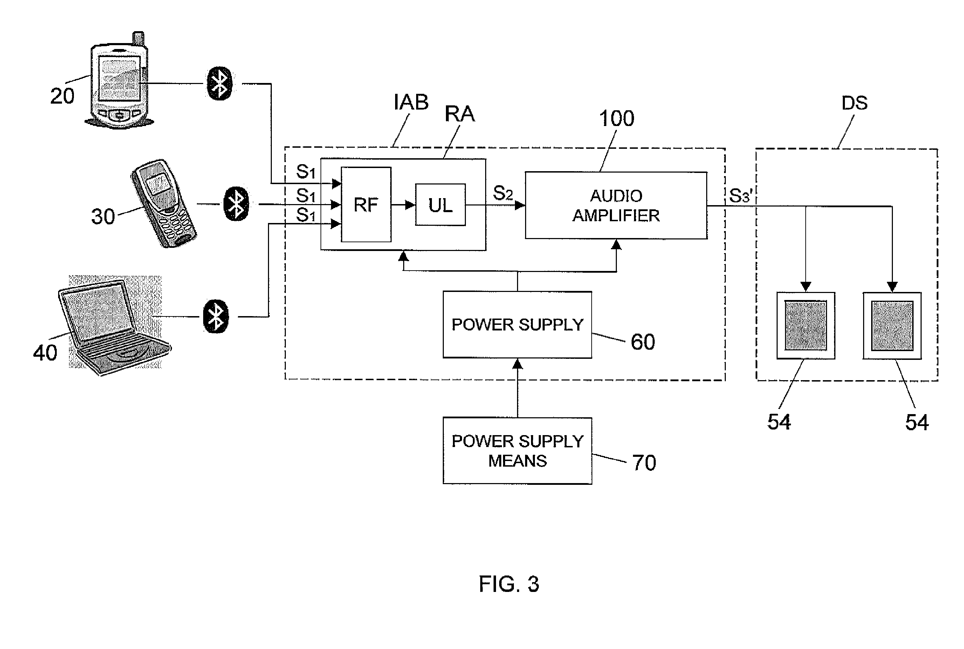

As it is shown in greater detail in Figures 2 and 3, the interface IAB comprises a Bluetooth® audio receiver RA and power supply means 60 for the audio receiver RA. The power supply means 60 are, in turn, supplied by a supply source 70, which can be the power mains voltage (90-230 Vac) or an external low voltage power supply, e.g. a SELV-type outer power supply.

More specifically, the audio receiver RA comprises a radio frequency block RF and a logic unit UL. The RF block inputs the audio signal S₁ transmitted by the mobile device 20, 30, 40 through the wireless Bluetooth® communication peripheral device thereof and sends it to the logic unit UL.

The logic unit UL converts the audio signal S₁ from digital to analog and is further responsible to manage the communication protocol of the Bluetooth® standard.

As it is known, in order to manage the operation among devices produced by different manufacturers, the Bluetooth® standard provides a layered communication protocol, which consists of a stack of layers, wherein each layer exploits services provided by the underlying layers, while offering its services to the upper layers. The above mentioned layered protocol is known and will not be described here in detail.

The interface IAB is connected to the acoustic diffusion system DS by means of a shielded cable 80, preferably having a length of some meters, and the quality of the audio signal outputted from the acoustic diffusion system is, preferably, of the CD type. There is, thus, obtained a stereo signal, with a band extending throughout the of audible range (20Hz÷20KHz) and quantized at 16 bit.

With reference to the block diagram of Figure 2, the acoustic diffusion system DS comprises an audio amplifier block 50 and one or more audio diffusers 52, which can have the most varied characteristics and power levels.

In this case, the output signal S₂ outputted from the audio receiver RA is send to a pre-amplifier block 90 provided in the interface IAB, before being transmitted to the acoustic diffusion system DS. Such a pre-amplifier block 90 is supplied by the power supply 60 and works for adapting the level of the signal S₃ outputted from the interface IAB to that of the AUX input signal of the acoustic diffusion systems present on the market.

Optionally, and with reference to the block diagram of Figure 3, the acoustic diffusion system DS comprises one or more non-amplified or passive audio diffusers 54, to which the interface IAB is directly connected.

In this case, the signal S₂ outputted from the audio receiver RA is transmitted to an audio amplifier block 100, which is integrated in the interface IAB and supplied by the power supply 60. The amplifier block 100 outputs an amplified signal S₃', which is transmitted to the passive audio diffusers 54.

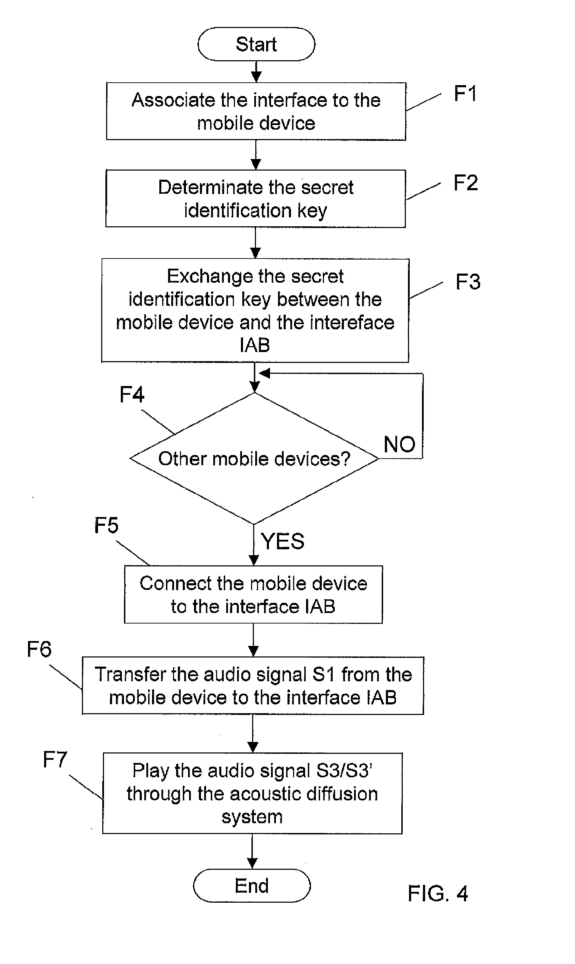

Figure 4 shows a flow chart, schematically describing the method for automatically connecting the flush mounted interface IAB to a mobile device provided with a Bluetooth® communication peripheral device and for transferring an audio signal from the mobile device to the interface IAB.

Firstly, a step (F1) of pairing the mobile device 20, 30, 40 and the interface IAB is carried out.

Preferably, the pairing step includes a step (F2) of determining a secret identification key, which can , for example, ask the user to enter a PIN (Personal Identification Number), and a subsequent step (F3) of exchanging the previously determined secret identification key between the mobile device 20, 30, 40 and the interface IAB.

At this point, the mobile device and the interface are paired, i.e. they share a previously negotiated secret identification key.

The pairing step (F1) is followed by the step of wireless Bluetooth® connecting (F4) the mobile device 20, 30, 40 to the interface IAB.

In this step, the interface IAB cyclically performs a control of the presence of mobile devices 20, 30, 40 previously paired thereto (F4). If it detects such a presence, which takes place when the mobile device enters the wireless Bluetooth® communication range, it automatically connects to the detected mobile device 20, 30, 40 (F5). They follow a step (F6) of wireless Bluetooth® transferring of the audio signal S₁ from the detected mobile device to the interface IAB and a step (F7) of reproduction of the audio signal S₃, S₃' outputted from the interface IAB, through the acoustic diffusion system DS.

From the above, it is easily understood how, due to the insertion of a Bluetooth® audio interface within a flush mounted connector box and to the use of a method for automatically connecting said interface to a mobile device provided with a Bluetooth® audio communication peripheral device, it is possible, advantageously, to obtain a Bluetooth® audio access point, through which a user, e.g. by using his cellular phone, can listen to his preferred audio tracks, without having to use uncomfortable connection cables and/or adapters, the whole being aesthetically and functionally integrated with the remaining components of the electric installation of the household or services sector environment.

Without departing from the scope of the invention determined by the claims, a person skilled in the art can make to the embodiment of the invention previously described all those changes and improvements suggested by normal experience and/or by the natural evolution of the art.

## Claims

1. A Bluetooth® audio interface (IAB) suitable for receiving an audio signal (S1) transmitted by a mobile device (20, 30, 40) provided with a Bluetooth® communication peripheral device and for transferring it (S3) to an acoustic diffusion system (DS),
**characterized in that** it comprises a Bluetooth® audio receiver (RA) and means (60) for power supplying the Bluetooth® audio receiver (RA), said Bluetooth® audio receiver (RA) and the respective power supply means (60) being sized such that they can be housed within a flush mounted connector box (10), and **in that** it is connected to the acoustic diffusion system (DS) by means of a shielded cable (80), the audio signal outputted from the acoustic diffusion system (DS) being a stereo signal, having a band extending throughout the audible range, and quantized at 16 bit.

2. An interface (IAB) according to claim 1, **characterized in that** said Bluetooth® audio receiver (RA) comprises a radio frequency block (RF) and a logic unit (UL), said frequency block (RF) being suitable for receiving at the input the audio signal (S1) transmitted by the mobile device (20, 30, 40) and for transmitting it to the logic unit (UL) and said logic unit (UL) being suitable for processing the audio signal (S1) received from the radio frequency block (RF) for a subsequent transmission thereof to the acoustic diffusion system (DS).

3. An interface (IAB) according to claim 1 or 2 **characterized in that** said acoustic diffusion system (DS) comprises an audio amplifier block (50) and at least one audio diffuser (52).

4. An interface (IAB) according to claim 3, **characterized in that** it further comprises an audio pre-amplifier block (90) supplied by the power supply means (60), which receives at the input the signal (S2) outputted from the logic unit (UL) and transmits a pre-amplified signal (S3) to the audio amplifier block (50) of the acoustic diffusion system (DS), said pre-amplifier block (90) being suitable for adapting the level of the signal outputted from the interface (IAB) to that of the AUX input signal of the acoustic diffusion system (DS).

5. An interface (IAB) according to claim 1 or 2, **characterized in that** said acoustic diffusion system (DS) comprises at least one passive audio diffuser (54).

6. An interface (IAB) according to claim 5, **characterized in that** it further comprises an integrated audio amplifier block (100) supplied by the power supply means (60), which receives at the input the signal (S2) outputted from the logic unit (UL) and transmits an amplified signal (S3') to said at least one passive audio diffuser (54).

7. An interface (IAB) according to any one of the preceding claims, **characterized in that** said interface (IAB) and said mobile device (20, 30, 40) support the A2DP Bluetooth® audio profile.

8. An interface (IAB) according to any one of the preceding claims, **characterized in that** the shielded cable (80) has a length of some meters.

9. A method for automatically connecting an interface (IAB) according to any one of the claims 1 to 8 to a mobile device (20, 30, 40) provided with a Bluetooth® communication peripheral device, the method comprising the steps of:
- to associate (F1) said mobile device (20, 30, 40) and said interface (IAB);
- to cyclically control (F4) through the interface (IAB) the presence of said mobile device (20, 30, 40) and, if this presence is detected;
- to connect (F5) the interface (IAB) to the detected mobile device (20, 30, 40).

10. A method according to claim 9, wherein said association step (F1) comprises the further steps of:
- to determine (F2) a secret identification key;
- to exchange (F3) said secret identification key between said mobile device (20, 30, 40) and said interface (IAB).
